# EUROPEAN PATENT SPECIFICATION

(11) **EP 4 292 088 B1**
(45) Date of publication and mention of the grant of the patent: **12.11.2025**
(21) Application number: 22753315.5
(22) Date of filing: 10.02.2022
(51) Int. Cl.: G10L 21/013, G06F 21/62, H04K 1/04

(54) **METHOD AND SYSTEM FOR ENABLING SPEAKER DE-IDENTIFICATION IN PUBLIC AUDIO DATA BY LEVERAGING ADVERSARIAL PERTURBATION**
VERFAHREN UND SYSTEM ZUR ERMÖGLICHUNG VON SPRECHERENTIDENTIFIKATION IN ÖFFENTLICHEN AUDIODATEN DURCH NUTZUNG ADVERSARIALER PERTURBATION
PROCÉDÉ, SYSTÈME ET PRODUIT PROGRAMME D'ORDINATEUR POUR PERMETTRE UNE DÉSIDENTIFICATION DE HAUT-PARLEUR DANS DES DONNÉES AUDIO PUBLIQUES PAR EXPLOITATION D'UNE PERTURBATION ADVERSARIALE

(30) Priority: 12.02.2021 US 202163148815 P
(43) Date of publication of application: 20.12.2023
(73) Proprietor: Visa International Service Association, San Francisco, California 94128 (US)
(72) Inventor: ZHANG, Yangyong, San Mateo, California 94402 (US); SHIRVANIAN, Maliheh, Cupertino, California 95014 (US); ARORA, Sunpreet Singh, San Jose, California 95136 (US)
(74) Representative: EIP
(86) International application number: PCT/US2022/015913
(87) International publication number: WO 2022/173900

(56) References cited:
- CA-A1- 3 060 144
- US-A1- 2008 232 653
- US-A1- 2011 041 185
- US-A1- 2011 218 801
- US-A1- 2019 238 568
- US-A1- 2020 372 353
- US-A1- 2020 395 035
- CHAMPION PIERRE ET AL: "Evaluating X-Vector-Based Speaker Anonymization Under White-Box Assessment", 24 February 2020, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 100 - 111, XP047610586
- MAGARINOS CARMEN ET AL: "Piecewise linear definition of transformation functions for speaker de-identification", 2016 FIRST INTERNATIONAL WORKSHOP ON SENSING, PROCESSING AND LEARNING FOR INTELLIGENT MACHINES (SPLINE), IEEE, 6 July 2016 (2016-07-06), pages 1 - 5, XP032934636, DOI: 10.1109/SPLIM.2016.7528408

## Description

### BACKGROUND

### 1. Field

This disclosed subject matter relates generally to methods, systems, and products for audio (e.g., voice) identification and, in some particular embodiments or aspects, to a method, system, and computer program product for enabling speaker de-identification in public audio data by leveraging adversarial perturbation.

### 2. Technical Considerations

Audio (e.g., voice) data may be used for identification and/or authentication, similar to other biometric data such as an individual's fingerprint and/or the like. A large amount of audio data is available publicly online (e.g., on the Internet and/or the like) via audio and/or video sharing platforms (e.g., video sharing websites such as YouTube^{®}, social media websites such as Facebook^{®}, and/or the like). Audio data may be used by fraudsters to generate fake voice samples that can be used to bypass identification and/or authentication systems. Certain systems use gradient-based (e.g., fast gradient signed method (FGSM) and/or the like) techniques for perturbing audio samples (e.g., voice samples) in an effort to prevent identification systems (e.g., of potential fraudsters) from identifying a speaker based on audio data (e.g., voice data of the speaker).

However, gradient-based (e.g., FGSM and/or the like) techniques introduce noticeable noise into the audio samples that can be detected (e.g., by a human listener) and/or transform the audio (e.g., voice) samples so significantly that such samples sound distorted to a human listener. Thus, changes to the audio data can be perceived by human listeners. Additionally, gradient-based techniques are generally only applicable to one type of identification system (e.g., gradient-based techniques rely on calculating a gradient with respect to a specific identification system, and as such, gradient-based techniques may be considered targeted attack(s) on the specific identification system) because gradients cannot be estimated without knowing the characteristics of the identification system (e.g., the machine and/or the technique being used by the identification system to identify the speaker).

"Evaluating X-Vector-Based Speaker Anonymization Under White-Box Assessment" (Champion Pierre et. et al., 24 February 2020 (2020-02-24), TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 100 - 111, XP047610586) describes removing a random selection of a target identity in the scenario of the Voice Privacy challenge to evaluate the extreme threat under a whitebox assessment.

"Piecewise linear definition of transformation functions for speaker de-identification" by MAGARINOS CARMEN ET AL, 2016 FIRST INTERNATIONAL WORKSHOP ON SENSING, PROCESSING AND LEARNING FOR INTELLIGENT MACHINES (SPLINE), IEEE, 6 July 2016 (2016-07-06), pages 1-5, XP032934636, DOI: 10.1109/SPLIM.2016.7528408, describes a voice conversion approach that does not require training any parameters consisting of manually defining frequency warping (FW) based transformations by using piecewise linear approximations.

US 2019/238568 A1 describes mechanisms for training a classifier to identify adversarial input data.

CA 3 060 144 A1 describes a system for generating an adversarial example in respect of a neural network, the adversarial example generated to improve a margin defined as a distance from a data example to a neural network decision boundary.

### SUMMARY

Accordingly, it is an object of the presently disclosed subject matter to provide methods, systems, and computer program products for enabling speaker de-identification in public audio data by leveraging adversarial perturbation that overcome some or all of the deficiencies identified above.

Aspects of the invention are defined by the appended independent claims.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF THE DRAWINGS

Additional advantages and details of the disclosed subject matter are explained in greater detail below with reference to the exemplary embodiments or aspects that are illustrated in the accompanying figures, in which:
FIG. 1 is a diagram of a non-limiting embodiment or aspect of an environment in which methods, systems, and/or computer program products, described herein, may be implemented according to the principles of the presently disclosed subject matter;
FIG. 2 is a diagram of a non-limiting embodiment or aspect of components of one or more devices of FIG. 1;
FIG. 3 is a flowchart of a non-limiting embodiment or aspect of a process for enabling speaker de-identification in public audio data by leveraging adversarial perturbation according to the principles of the presently disclosed subject matter;
FIG. 4 is an exemplary graph of a non-limiting embodiment or aspect of two different pitch frequencies;
FIG. 5 is a diagram of an exemplary implementation of a non-limiting embodiment or aspect of the process in FIG. 3;
FIG. 6 is a screen shot of an exemplary graph of a non-limiting embodiment or aspect of at least one voice sample;
FIG. 7 is an exemplary graph of a non-limiting embodiment or aspect of a voice sample after applying the one pitch perturbation;
FIG. 8A is an exemplary graph of a non-limiting embodiment or aspect of a voice sample after applying FGSM-based perturbation; and
FIG. 8B is an exemplary graph of a non-limiting embodiment or aspect of a voice sample after applying a combination of FGSM-based perturbation and one pitch perturbation.

### DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

As used herein, the terms "communication" and "communicate" may refer to the reception, receipt, transmission, transfer, provision, and/or the like of information (e.g., data, signals, messages, instructions, commands, and/or the like). For one unit (e.g., a device, a system, a component of a device or system, combinations thereof, and/or the like) to be in communication with another unit means that the one unit is able to directly or indirectly receive information from and/or transmit information to the other unit. This may refer to a direct or indirect connection (e.g., a direct communication connection, an indirect communication connection, and/or the like) that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit (e.g., a third unit located between the first unit and the second unit) processes information received from the first unit and communicates the processed information to the second unit. In some non-limiting embodiments or aspects, a message may refer to a network packet (e.g., a data packet and/or the like) that includes data. It will be appreciated that numerous other arrangements are possible.

As used herein, the terms "issuer institution," "portable financial device issuer," "issuer," or "issuer bank" may refer to one or more entities that provide accounts to customers for conducting transactions (e.g., payment transactions), such as initiating credit and/or debit payments. For example, an issuer institution may provide an account identifier, such as a primary account number (PAN), to a customer that uniquely identifies one or more accounts associated with that customer. The account identifier may be embodied on a portable financial device, such as a physical financial instrument, e.g., a payment card, and/or may be electronic and used for electronic payments. The terms "issuer institution" and "issuer institution system" may also refer to one or more computer systems operated by or on behalf of an issuer institution, such as a server computer executing one or more software applications. For example, an issuer institution system may include one or more authorization servers for authorizing a transaction.

As used herein, the term "account identifier" may include one or more types of identifiers associated with a user account (e.g., a PAN, a card number, a payment card number, a payment token, and/or the like). In some non-limiting embodiments or aspects, an issuer institution may provide an account identifier (e.g., a PAN, a payment token, and/or the like) to a user that uniquely identifies one or more accounts associated with that user. The account identifier may be embodied on a physical financial instrument (e.g., a portable financial instrument, a payment card, a credit card, a debit card, and/or the like) and/or may be electronic information communicated to the user that the user may use for electronic payments. In some non-limiting embodiments or aspects, the account identifier may be an original account identifier, where the original account identifier was provided to a user at the creation of the account associated with the account identifier. In some non-limiting embodiments or aspects, the account identifier may be an account identifier (e.g., a supplemental account identifier) that is provided to a user after the original account identifier was provided to the user. For example, if the original account identifier is forgotten, stolen, and/or the like, a supplemental account identifier may be provided to the user. In some non-limiting embodiments or aspects, an account identifier may be directly or indirectly associated with an issuer institution such that an account identifier may be a payment token that maps to a PAN or other type of identifier. Account identifiers may be alphanumeric, any combination of characters and/or symbols, and/or the like. An issuer institution may be associated with a bank identification number (BIN) that uniquely identifies the issuer institution.

As used herein, the terms "payment token" or "token" may refer to an identifier that is used as a substitute or replacement identifier for an account identifier, such as a PAN. Tokens may be associated with a PAN or other account identifiers in one or more data structures (e.g., one or more databases and/or the like) such that they can be used to conduct a transaction (e.g., a payment transaction) without directly using the account identifier, such as a PAN. In some examples, an account identifier, such as a PAN, may be associated with a plurality of tokens for different individuals, different uses, and/or different purposes. For example, a payment token may include a series of numeric and/or alphanumeric characters that may be used as a substitute for an original account identifier. For example, a payment token "4900 0000 0000 0001" may be used in place of a PAN "4147 0900 0000 1234." In some non-limiting embodiments or aspects, a payment token may be "format preserving" and may have a numeric format that conforms to the account identifiers used in existing payment processing networks (e.g., ISO 8583 financial transaction message format). In some non-limiting embodiments or aspects, a payment token may be used in place of a PAN to initiate, authorize, settle, or resolve a payment transaction or represent the original credential in other systems where the original credential would typically be provided. In some non-limiting embodiments or aspects, a token value may be generated such that the recovery of the original PAN or other account identifier from the token value may not be computationally derived (e.g., with a one-way hash or other cryptographic function). Further, in some non-limiting embodiments or aspects, the token format may be configured to allow the entity receiving the payment token to identify it as a payment token and recognize the entity that issued the token.

As used herein, the term "provisioning" may refer to a process of enabling a device to use a resource or service. For example, provisioning may involve enabling a device to perform transactions using an account. Additionally or alternatively, provisioning may include adding provisioning data associated with account data (e.g., a payment token representing an account number) to a device.

As used herein, the term "token requestor" may refer to an entity that is seeking to implement tokenization according to embodiments or aspects of the presently disclosed subject matter. For example, the token requestor may initiate a request that a PAN be tokenized by submitting a token request message to a token service provider. Additionally or alternatively, a token requestor may no longer need to store a PAN associated with a token once the requestor has received the payment token in response to a token request message. In some non-limiting embodiments or aspects, the requestor may be an application, a device, a process, or a system that is configured to perform actions associated with tokens. For example, a requestor may request registration with a network token system, request token generation, token activation, token de-activation, token exchange, other token lifecycle management related processes, and/or any other token related processes. In some non-limiting embodiments or aspects, a requestor may interface with a network token system through any suitable communication network and/or protocol (e.g., using HTTPS, SOAP, and/or an XML interface among others). For example, a token requestor may include card-on-file merchants, acquirers, acquirer processors, payment gateways acting on behalf of merchants, payment enablers (e.g., original equipment manufacturers, mobile network operators, and/or the like), digital wallet providers, issuers, third-party wallet providers, payment processing networks, and/or the like. In some non-limiting embodiments or aspects, a token requestor may request tokens for multiple domains and/or channels. Additionally or alternatively, a token requestor may be registered and identified uniquely by the token service provider within the tokenization ecosystem. For example, during token requestor registration, the token service provider may formally process a token requestor's application to participate in the token service system. In some non-limiting embodiments or aspects, the token service provider may collect information pertaining to the nature of the requestor and relevant use of tokens to validate and formally approve the token requestor and establish appropriate domain restriction controls. Additionally or alternatively, successfully registered token requestors may be assigned a token requestor identifier that may also be entered and maintained within the token vault. In some non-limiting embodiments or aspects, token requestor identifiers may be revoked and/or token requestors may be assigned new token requestor identifiers. In some non-limiting embodiments or aspects, this information may be subject to reporting and audit by the token service provider.

As used herein, the term a "token service provider" may refer to an entity including one or more server computers in a token service system that generates, processes and maintains payment tokens. For example, the token service provider may include or be in communication with a token vault where the generated tokens are stored. Additionally or alternatively, the token vault may maintain one-to-one mapping between a token and a PAN represented by the token. In some non-limiting embodiments or aspects, the token service provider may have the ability to set aside licensed BINs as token BINs to issue tokens for the PANs that may be submitted to the token service provider. In some non-limiting embodiments or aspects, various entities of a tokenization ecosystem may assume the roles of the token service provider. For example, payment networks and issuers or their agents may become the token service provider by implementing the token services according to non-limiting embodiments or aspects of the presently disclosed subject matter. Additionally or alternatively, a token service provider may provide reports or data output to reporting tools regarding approved, pending, or declined token requests, including any assigned token requestor ID. The token service provider may provide data output related to token-based transactions to reporting tools and applications and present the token and/or PAN as appropriate in the reporting output. In some non-limiting embodiments or aspects, the EMVCo standards organization may publish specifications defining how tokenized systems may operate. For example, such specifications may be informative, but they are not intended to be limiting upon any of the presently disclosed subject matter.

As used herein, the term "token vault" may refer to a repository that maintains established token-to-PAN mappings. For example, the token vault may also maintain other attributes of the token requestor that may be determined at the time of registration and/or that may be used by the token service provider to apply domain restrictions or other controls during transaction processing. In some non-limiting embodiments or aspects, the token vault may be a part of a token service system. For example, the token vault may be provided as a part of the token service provider. Additionally or alternatively, the token vault may be a remote repository accessible by the token service provider. In some non-limiting embodiments or aspects, token vaults, due to the sensitive nature of the data mappings that are stored and managed therein, may be protected by strong underlying physical and logical security. Additionally or alternatively, a token vault may be operated by any suitable entity, including a payment network, an issuer, clearing houses, other financial institutions, transaction service providers, and/or the like.

As used herein, the term "merchant" may refer to one or more entities (e.g., operators of retail businesses that provide goods and/or services, and/or access to goods and/or services, to a user (e.g., a customer, a consumer, a customer of the merchant, and/or the like) based on a transaction (e.g., a payment transaction)). As used herein, the term "merchant system" may refer to one or more computer systems operated by or on behalf of a merchant, such as a server computer executing one or more software applications. As used herein, the term "product" may refer to one or more goods and/or services offered by a merchant.

As used herein, the term "point-of-sale (POS) device" may refer to one or more devices, which may be used by a merchant to initiate transactions (e.g., a payment transaction), engage in transactions, and/or process transactions. For example, a POS device may include one or more computers, peripheral devices, card readers, near-field communication (NFC) receivers, radio frequency identification (RFID) receivers, and/or other contactless transceivers or receivers, contact-based receivers, payment terminals, computers, servers, input devices, and/or the like.

As used herein, the term "point-of-sale (POS) system" may refer to one or more computers and/or peripheral devices used by a merchant to conduct a transaction. For example, a POS system may include one or more POS devices and/or other like devices that may be used to conduct a payment transaction. A POS system (e.g., a merchant POS system) may also include one or more server computers programmed or configured to process online payment transactions through webpages, mobile applications, and/or the like.

As used herein, the term "transaction service provider" may refer to an entity that receives transaction authorization requests from merchants or other entities and provides guarantees of payment, in some cases through an agreement between the transaction service provider and the issuer institution. In some non-limiting embodiments or aspects, a transaction service provider may include a credit card company, a debit card company, and/or the like. As used herein, the term "transaction service provider system" may also refer to one or more computer systems operated by or on behalf of a transaction service provider, such as a transaction processing server executing one or more software applications. A transaction processing server may include one or more processors and, in some non-limiting embodiments or aspects, may be operated by or on behalf of a transaction service provider.

As used herein, the term "acquirer" may refer to an entity licensed by the transaction service provider and approved by the transaction service provider to originate transactions (e.g., payment transactions) using a portable financial device associated with the transaction service provider. As used herein, the term "acquirer system" may also refer to one or more computer systems, computer devices, and/or the like operated by or on behalf of an acquirer. The transactions may include payment transactions (e.g., purchases, original credit transactions (OCTs), account funding transactions (AFTs), and/or the like). In some non-limiting embodiments or aspects, the acquirer may be authorized by the transaction service provider to assign merchant or service providers to originate transactions using a portable financial device of the transaction service provider. The acquirer may contract with payment facilitators to enable the payment facilitators to sponsor merchants. The acquirer may monitor compliance of the payment facilitators in accordance with regulations of the transaction service provider. The acquirer may conduct due diligence of the payment facilitators and ensure that proper due diligence occurs before signing a sponsored merchant. The acquirer may be liable for all transaction service provider programs that the acquirer operates or sponsors. The acquirer may be responsible for the acts of the acquirer's payment facilitators, merchants that are sponsored by an acquirer's payment facilitators, and/or the like. In some non-limiting embodiments or aspects, an acquirer may be a financial institution, such as a bank.

As used herein, the terms "electronic wallet," "electronic wallet mobile application," and "digital wallet" may refer to one or more electronic devices and/or one or more software applications configured to initiate and/or conduct transactions (e.g., payment transactions, electronic payment transactions, and/or the like). For example, an electronic wallet may include a user device (e.g., a mobile device) executing an application program and server-side software and/or databases for maintaining and providing transaction data to the user device. As used herein, the term "electronic wallet provider" may include an entity that provides and/or maintains an electronic wallet and/or an electronic wallet mobile application for a user (e.g., a customer). Examples of an electronic wallet provider include, but are not limited to, Google Pay^{®}, Android Pay^{®}, Apple Pay^{®}, and Samsung Pay^{®}. In some non-limiting examples, a financial institution (e.g., an issuer institution) may be an electronic wallet provider. As used herein, the term "electronic wallet provider system" may refer to one or more computer systems, computer devices, servers, groups of servers, and/or the like operated by or on behalf of an electronic wallet provider.

As used herein, the term "portable financial device" may refer to a payment card (e.g., a credit or debit card), a gift card, a smartcard, smart media, a payroll card, a healthcare card, a wrist band, a machine-readable medium containing account information, a keychain device or fob, an RFID transponder, a retailer discount or loyalty card, a cellular phone, an electronic wallet mobile application, a personal digital assistant (PDA), a pager, a security card, a computer, an access card, a wireless terminal, a transponder, and/or the like. In some non-limiting embodiments or aspects, the portable financial device may include volatile or non-volatile memory to store information (e.g., an account identifier, a name of the account holder, and/or the like).

As used herein, the term "payment gateway" may refer to an entity and/or a payment processing system operated by or on behalf of such an entity (e.g., a merchant service provider, a payment service provider, a payment facilitator, a payment facilitator that contracts with an acquirer, a payment aggregator, and/or the like), which provides payment services (e.g., transaction service provider payment services, payment processing services, and/or the like) to one or more merchants. The payment services may be associated with the use of portable financial devices managed by a transaction service provider. As used herein, the term "payment gateway system" may refer to one or more computer systems, computer devices, servers, groups of servers, and/or the like operated by or on behalf of a payment gateway and/or to a payment gateway itself. As used herein, the term "payment gateway mobile application" may refer to one or more electronic devices and/or one or more software applications configured to provide payment services for transactions (e.g., payment transactions, electronic payment transactions, and/or the like).

As used herein, the terms "client" and "client device" may refer to one or more client-side devices or systems (e.g., remote from a transaction service provider) used to initiate or facilitate a transaction (e.g., a payment transaction). As an example, a "client device" may refer to one or more POS devices used by a merchant, one or more acquirer host computers used by an acquirer, one or more mobile devices used by a user, and/or the like. In some non-limiting embodiments or aspects, a client device may be an electronic device configured to communicate with one or more networks and initiate or facilitate transactions. For example, a client device may include one or more computers, portable computers, laptop computers, tablet computers, mobile devices, cellular phones, wearable devices (e.g., watches, glasses, lenses, clothing, and/or the like), PDAs, and/or the like. Moreover, a "client" may also refer to an entity (e.g., a merchant, an acquirer, and/or the like) that owns, utilizes, and/or operates a client device for initiating transactions (e.g., for initiating transactions with a transaction service provider).

As used herein, the term "server" may refer to one or more computing devices (e.g., processors, storage devices, similar computer components, and/or the like) that communicate with client devices and/or other computing devices over a network (e.g., a public network, the Internet, a private network, and/or the like) and, in some examples, facilitate communication among other servers and/or client devices. It will be appreciated that various other arrangements are possible. As used herein, the term "system" may refer to one or more computing devices or combinations of computing devices (e.g., processors, servers, client devices, software applications, components of such, and/or the like). Reference to "a device," "a server," "a processor," and/or the like, as used herein, may refer to a previously-recited device, server, or processor that is recited as performing a previous step or function, a different server or processor, and/or a combination of servers and/or processors. For example, as used in the specification and the claims, a first server or a first processor that is recited as performing a first step or a first function may refer to the same or different server or the same or different processor recited as performing a second step or a second function.

Non-limiting embodiments or aspects of the disclosed subject matter are directed to systems, methods, and computer program products for enabling speaker de-identification in public audio data by leveraging adversarial perturbation. For example, non-limiting embodiments or aspects of the disclosed subject matter provide receiving audio data associated with at least one voice sample, perturbing the at least one voice sample toward an edge of a decision boundary of at least one classifier model, perturbing one pitch of the voice sample(s) to shift the voice sample(s) across the decision boundary of the at least one classifier model to provide at least one de-identified voice sample, and encoding a media file with the at least one de-identified voice sample. Such embodiments or aspects provide systems and techniques that use small perturbations and/or the combination of both gradient-based and non-gradient-based optimization (e.g., perturbations) to allow a system to protect against any potential identification system (e.g., an untargeted attack) without profoundly (e.g., perceptibly) changing the sound to a human listener. Further, such embodiments or aspects provide systems and techniques that allow non-targeted perturbations without having to estimate the gradients of unknown targets.

For the purpose of illustration, in the following description, while the presently disclosed subject matter is described with respect to methods, systems, and computer program products for enabling speaker de-identification, e.g., in public audio data by leveraging adversarial perturbation, one skilled in the art will recognize that the disclosed subject matter is not limited to the illustrative embodiments or aspects. For example, the methods, systems, and computer program products described herein may be used with a wide variety of settings in which audio and/or voice data may be used, e.g., voice authentication and/or verification systems, de-identification systems for defending against potentially unknown identification systems, and/or the like.

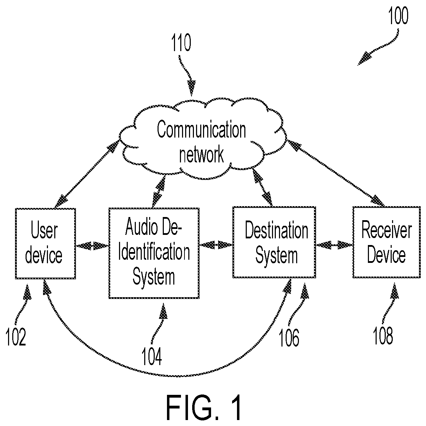

Referring now to FIG. 1, FIG. 1 is a diagram of a non-limiting embodiment or aspect of an environment 100 in which systems, products, and/or methods, as described herein, may be implemented. As shown in FIG. 1, environment 100 includes user device 102, audio de-identification system 104, destination system 106, receiver device 108, and communication network 110.

In some non-limiting embodiments or aspects, user device 102 may include one or more devices capable of receiving information from and/or communicating information to audio de-identification system 104, destination system 106, and/or receiver device 108, e.g., via communication network 110. Additionally or alternatively, each user device 106 may include a device capable of receiving information from and/or communicating information to other user devices 102 and/or receiver device 108, e.g., via communication network 110, another network (e.g., an ad hoc network, a local network, a private network, a virtual private network, and/or the like), and/or any other suitable communication technique. For example, user device 102 may include a client device and/or the like. Additionally or alternatively, user device 102 may include at least one computing device, such as one or more computers, portable computers, laptop computers, tablet computers, mobile devices, cellular phones, wearable devices (e.g., watches, glasses, lenses, clothing, and/or the like), PDAs, and/or the like. In some non-limiting embodiments or aspects, user device 102 may or may not be capable of receiving information (e.g., from destination system 106 or from another user device 102) via a short-range wireless communication connection (e.g., an NFC communication connection, an RFID communication connection, a Bluetooth^{®} communication connection, a Zigbee^{®} communication connection, and/or the like), and/or communicating information (e.g., to destination system 106) via a short-range wireless communication connection (e.g., to and/or from other user devices 102, receiver device 108, and/or the like).

In some non-limiting embodiments or aspects, audio de-identification system 104 may include one or more devices capable of receiving information from and/or communicating information to user device 102, destination system 106, and/or receiver device 108, e.g., via communication network 110. For example, audio de-identification system 104 may include at least one computing device, such as a server (e.g., a transaction processing server), a group of servers, and/or other like devices. Additionally or alternatively, audio de-identification system 104 may be associated with a transaction service provider as described herein. In some non-limiting embodiments or aspects, audio de-identification system 104 may be in communication with a data storage device, which may be local or remote to audio de-identification system 104. In some non-limiting embodiments or aspects, audio de-identification system 104 may be capable of receiving information from, storing information in, communicating information to, or searching information stored in the data storage device.

In some non-limiting embodiments or aspects, destination system 106 may include one or more devices capable of receiving information from and/or communicating information to user device 102, audio de-identification system 104, and/or receiver device 108 via communication network 110. In some non-limiting embodiments or aspects, destination system 106 may include a computing device, such as a server, a group of servers, a client device, a group of client devices, and/or other like devices. Additionally or alternatively, destination system 106 may include a device capable of receiving information from and/or communicating information to user device 102 and/or receiver device 108, e.g., via communication network 110, another network (e.g., an ad hoc network, a local network, a private network, a virtual private network, and/or the like), a communication connection (e.g., an NFC communication connection, an RFID communication connection, a Bluetooth^{®} communication connection, a Zigbee^{®} communication connection, and/or the like), and/or any other suitable communication technique. In some non-limiting embodiments or aspects, destination system 106 may be associated with a merchant as described herein. In some non-limiting embodiments or aspects, destination system 106 may include one or more client devices. For example, destination system 106 may include a client device that allows a merchant to communicate information to audio de-identification system 104. In some non-limiting embodiments or aspects, destination system 106 may include one or more devices, such as computers, computer systems, and/or peripheral devices capable of being used by a merchant to conduct a transaction with a user. For example destination system 106 may include a POS device and/or a POS system.

In some non-limiting embodiments or aspects, receiver device 108 may include one or more devices capable of receiving information from and/or communicating information to user device 102, audio de-identification system 104, and/or destination system 106 via communication network 110. For example, receiver device 108 may include a computing device, such as one or more computers, portable computers, laptop computers, tablet computers, mobile devices, cellular phones, wearable devices (e.g., watches, glasses, lenses, clothing, and/or the like), PDAs, a server, a group of servers, and/or the like. Additionally or alternatively, each receiver device 108 may include a device capable of receiving information from and/or communicating information to user device 102 and/or other receiver devices 108 via communication network 110, another network (e.g., an ad hoc network, a local network, a private network, a virtual private network, and/or the like), and/or any other suitable communication technique. For example, receiver device 108 may include a client device and/or the like. In some non-limiting embodiments or aspects, receiver device 108 may or may not be capable of receiving information (e.g., from destination system 106, user device 102, or from another receiver device 108) via a short-range wireless communication connection (e.g., an NFC communication connection, an RFID communication connection, a Bluetooth^{®} communication connection, a Zigbee^{®} communication connection, and/or the like) and/or communicating information (e.g., to destination system 106) via a short-range wireless communication connection. In some non-limiting embodiments or aspects, receiver device 108 may be associated with a second user (e.g., a receiver of audio data from the (first) user of user device 102), as described herein.

In some non-limiting embodiments or aspects, communication network 110 may include one or more wired and/or wireless networks. For example, communication network 110 may include a cellular network (e.g., a long-term evolution (LTE) network, a third generation (3G) network, a fourth generation (4G) network, a fifth generation (5G) network, a code division multiple access (CDMA) network, and/or the like), a public land mobile network (PLMN), a local area network (LAN), a wide area network (WAN), a metropolitan area network (MAN), a telephone network (e.g., the public switched telephone network (PSTN)), a private network (e.g., a private network associated with a transaction service provider), an ad hoc network, an intranet, the Internet, a fiber optic-based network, a cloud computing network, and/or the like, and/or a combination of these or other types of networks.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally or alternatively, a set of systems (e.g., one or more systems) or a set of devices (e.g., one or more devices) of environment 100 may perform one or more functions described as being performed by another set of systems or another set of devices of environment 100.

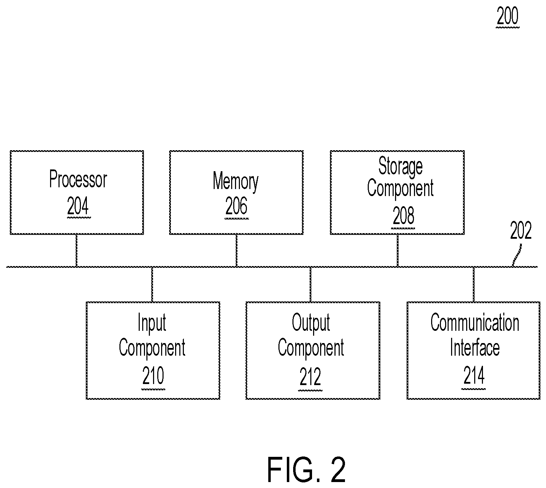

Referring now to FIG. 2, FIG. 2 is a diagram of example components of a device 200. Device 200 may correspond to one or more devices of user device 102, one or more devices of audio de-identification system 104, one or more devices of destination system 106, and/or one or more devices of receiver device 108. In some non-limiting embodiments or aspects, user device 102, audio de-identification system 104, destination system 106, and/or receiver device 108 may include at least one device 200 and/or at least one component of device 200. As shown in FIG. 2, device 200 may include bus 202, processor 204, memory 206, storage component 208, input component 210, output component 212, and communication interface 214.

Bus 202 may include a component that permits communication among the components of device 200. In some non-limiting embodiments or aspects, processor 204 may be implemented in hardware, software, firmware, and/or any combination thereof. For example, processor 204 may include a processor (e.g., a central processing unit (CPU), a graphics processing unit (GPU), an accelerated processing unit (APU), and/or the like), a microprocessor, a digital signal processor (DSP), and/or any processing component (e.g., a field-programmable gate array (FPGA), an application-specific integrated circuit (ASIC), and/or the like), and/or the like, which can be programmed to perform a function. Memory 206 may include random access memory (RAM), read-only memory (ROM), and/or another type of dynamic or static storage device (e.g., flash memory, magnetic memory, optical memory, and/or the like) that stores information and/or instructions for use by processor 204.

Storage component 208 may store information and/or software related to the operation and use of device 200. For example, storage component 208 may include a hard disk (e.g., a magnetic disk, an optical disk, a magneto-optic disk, a solid state disk, and/or the like), a compact disc (CD), a digital versatile disc (DVD), a floppy disk, a cartridge, a magnetic tape, and/or another type of computer-readable medium, along with a corresponding drive.

Input component 210 may include a component that permits device 200 to receive information, such as via user input (e.g., a touch screen display, a keyboard, a keypad, a mouse, a button, a switch, a microphone, a camera, and/or the like). Additionally or alternatively, input component 210 may include a sensor for sensing information (e.g., a global positioning system (GPS) component, an accelerometer, a gyroscope, an actuator, and/or the like). Output component 212 may include a component that provides output information from device 200 (e.g., a display, a speaker, one or more light-emitting diodes (LEDs), and/or the like).

Communication interface 214 may include a transceiver-like component (e.g., a transceiver, a receiver and transmitter that are separate, and/or the like) that enables device 200 to communicate with other devices, such as via a wired connection, a wireless connection, or a combination of wired and wireless connections. Communication interface 214 may permit device 200 to receive information from another device and/or provide information to another device. For example, communication interface 214 may include an Ethernet interface, an optical interface, a coaxial interface, an infrared interface, a radio frequency (RF) interface, a universal serial bus (USB) interface, a Wi-Fi^{®} interface, a Bluetooth^{®} interface, a Zigbee^{®} interface, a cellular network interface, and/or the like.

Device 200 may perform one or more processes described herein. Device 200 may perform these processes based on processor 204 executing software instructions stored by a computer-readable medium, such as memory 206 and/or storage component 208. A computer-readable medium (e.g., a non-transitory computer-readable medium) is defined herein as a non-transitory memory device. A non-transitory memory device includes memory space located inside of a single physical storage device or memory space spread across multiple physical storage devices.

Software instructions may be read into memory 206 and/or storage component 208 from another computer-readable medium or from another device via communication interface 214. When executed, software instructions stored in memory 206 and/or storage component 208 may cause processor 204 to perform one or more processes described herein. Additionally or alternatively, hardwired circuitry may be used in place of or in combination with software instructions to perform one or more processes described herein. Thus, embodiments or aspects described herein are not limited to any specific combination of hardware circuitry and software.

The number and arrangement of components shown in FIG. 2 are provided as an example. In some non-limiting embodiments or aspects, device 200 may include additional components, fewer components, different components, or differently arranged components than those shown in FIG. 2. Additionally or alternatively, a set of components (e.g., one or more components) of device 200 may perform one or more functions described as being performed by another set of components of device 200.

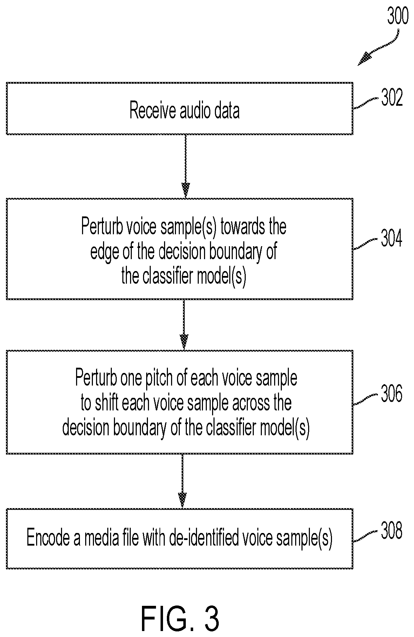

Referring now to FIG. 3, FIG. 3 is a flowchart of an embodiment or aspect according to the claimed invention of a process 300 for enabling speaker de-identification in public audio data by leveraging adversarial perturbation. In some non-limiting embodiments or aspects, one or more of the steps of process 300 may be performed (e.g., completely, partially, and/or the like) by audio de-identification system 104 (e.g., one or more devices of audio de-identification system 104). In some non-limiting embodiments or aspects, one or more of the steps of process 300 may be performed (e.g., completely, partially, and/or the like) by another system, another device, another group of systems, or another group of devices, separate from or including audio de-identification system 104, such as user device 102, destination system 106 (e.g., one or more devices of destination system 106), receiver device 108, and/or the like.

As shown in FIG. 3, at step 302, process 300 includes receiving audio data. For example, audio de-identification system 104 receives audio data (e.g., from user device 102, destination system 106, and/or the like).

In some non-limiting embodiments or aspects, audio de-identification system 104 may receive (e.g., from user device 102, destination system 106, and/or the like) audio data (e.g., a voice sample data and/or the like) associated with a plurality of media files (e.g., voice samples, video files including audio and/or voice samples, and/or the like). In some non-limiting embodiments or aspects, the plurality of media files may include a plurality of voice samples.

In some non-limiting embodiments or aspects, user device 102 may communicate audio data (e.g., a voice sample data and/or the like) associated with a plurality of media files (e.g., voice samples, video files including audio and/or voice samples, and/or the like) to audio de-identification system 104. Additionally or alternatively, user device 102 may communicate audio data (e.g., a voice sample data and/or the like) associated with a plurality of media files (e.g., voice samples, video files including audio and/or voice samples, and/or the like) to destination system 106, which may communicate the audio data (e.g., a voice sample data and/or the like) associated with a plurality of media files (e.g., voice samples, video files including audio and/or voice samples, and/or the like) to audio de-identification system 104. Additionally or alternatively, destination system 106 may communicate audio data (e.g., a voice sample data and/or the like) associated with a plurality of media files (e.g., voice samples, video files including audio and/or voice samples, and/or the like) to audio de-identification system 104. For example, destination system 106 may communicate (e.g., upload) existing and/or previously posted media files to audio de-identification system 106 for de-identification.

As shown in FIG. 3, at step 304, process 300 includes perturbing audio data (e.g., voice sample(s)) toward the decision boundary of at least one classifier model. For example, audio de-identification system 104 perturbs audio data (e.g., voice sample(s)) toward the decision boundary of at least one classifier model.

According to the claimed invention, audio de-identification system 104 injects perturbations into at least one voice sample to move the at least one voice sample toward, but not across, the decision boundary of at least one classifier model. According to the claimed invention, injecting perturbations into the at least one voice sample embeds noise in the at least one voice sample for the length of the audio data.

In some non-limiting embodiments or aspects, the at least one classifier model may include a plurality of classifier models, each having a respective decision boundary associated therewith. Additionally or alternatively, perturbing may include perturbing the voice sample(s), e.g., to move toward each decision boundary, to move toward at least a subset of the decision boundaries, to reduce a total and/or average distance of the sample(s) from all decision boundaries, any combination thereof, and/or the like.

As shown in FIG. 3, at step 306, process 300 includes perturbing one pitch of each voice sample across the decision boundary of at least one classifier model. For example, audio de-identification system 104 perturbs one pitch of each voice sample across the decision boundary of at least one classifier model.

In some non-limiting embodiments or aspects, audio de-identification system 104 may determine a spectrum of pitches. Additionally or alternatively, audio de-identification system 104 may input the spectrum of pitches into a non-gradient based perturbation algorithm to provide a level of impact of perturbing each pitch of the spectrum of pitches. Additionally or alternatively, audio de-identification system 104 may select at least one pitch from the spectrum of pitches based on the respective level of impact of the pitch. Additionally or alternatively, audio de-identification system 104 may inject a perturbation into the at least one pitch selected to shift each voice sample across the decision boundary of the at least one classifier model.

In some non-limiting embodiments or aspects, audio de-identification system 104 may use the pitch tracking algorithm (e.g., Convolutional Representation for Pitch Estimation (CREPE) and/or the like) to estimate pitches. Additionally or alternatively, the non-gradient based algorithm used by audio de-identification system 104 may be a genetic algorithm, an evolutionary algorithm, a differential evolutionary algorithm, any combination thereof, and/or the like.

In some non-limiting embodiments or aspects, a differential evolution (DE) algorithm may be used to find at least one pitch (e.g., effective, optimal, and/or like pitches). DE may include an optimization strategy that uses crossing and/or mutation to optimize a given population (e.g., a spectrum of pitches). For example, audio data may be input into a pitch tracking algorithm (e.g., CREPE and/or the like) to identify a first set of pitches. The first set of pitches may be input into a DE algorithm as a first generation (e.g., parent generation). The DE algorithm may evaluate the first generation (e.g., parent generation) to determine which pitch/pitches of the first set of pitches will have a high impact (e.g., satisfy (e.g., exceed) a threshold associated with the level of impact, be above at least some (e.g., a percentage) of other pitches in terms of level of impact, and/or the like). The pitch/pitches which is/are determined to have a high impact may be used for to the next generation (e.g., child generation). For example, the DE algorithm may perform at least one evolutionary step which may cross and/or mutate candidate pitches (e.g., pitches with high impact) from the first generation (e.g., parent generation) to generate at least one next generation (e.g., child generation, evolved generation, and/or the like). At each evolutionary step (e.g., each respective generation), the DE algorithm may determine which pitch/pitches of the respective population will have a high impact, as described herein. The DE algorithm may continue (e.g., repeatedly, iteratively, and/or the like) until the DE algorithm generates an output of at least one pitch that has the highest impact (e.g., satisfy (e.g., exceed) a threshold associated with the level of impact, be above at least some (e.g., all) of other pitches in terms of level of impact, and/or the like).

Put another way, the candidate pitches are evaluated, the highest impact pitches are selected, and the next generation of candidate pitches (children) are generated based on the selected pitches from the previous generation (parents).

In some non-limiting embodiments or aspects, a difference between the at least one voice sample and the at least one de-identified voice sample generated by audio de-identification system 104 may be imperceptible to a human listener.

As shown in FIG. 3, at step 308, process 300 includes encoding at least one media file with the at least one de-identified voice sample. For example, audio de-identification system 104 encodes at least one media file with the at least one de-identified voice sample.

In some non-limiting embodiments or aspects, the media file with the at least one de-identified voice sample may be communicated (e.g., from identification system 104). For example, audio de-identification system 104 may communicate the media file with the at least one de-identified voice sample to destination system 106. Additionally or alternatively, audio de-identification system 104 may communicate the media file with the at least one de-identified voice sample to receiver device 108.

The number and arrangement of steps shown in FIG. 3 are provided as an example. There may be additional steps, fewer steps, different steps, and/or differently arranged steps than those shown in FIG. 3. Furthermore, two or more steps shown in FIG. 3 may be implemented within a single step, or a single step shown in FIG. 3 may be implemented as multiple steps. Additionally or alternatively, a step of system 300 may perform one or more steps described as being performed by another step of process 300.

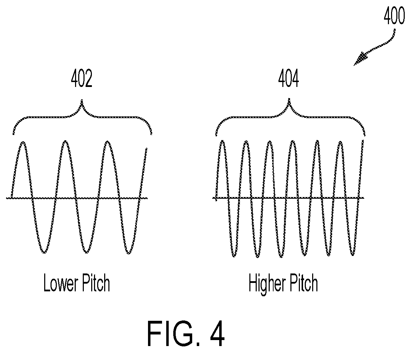

Referring now to FIG. 4, FIG. 4 is an exemplary graph 400 of a non-limiting embodiment or aspect of two different pitch frequencies. In some non-limiting embodiments or aspects, pitches 402 and 404 may be a perceptual property of sound which may allow them to be ordered (e.g., highest to lowest or lowest to highest) on a frequency-related scale. For example, lower pitch 402 may have a lower frequency and/or be perceived as lower by a human listener than higher pitch 404 and higher pitch 404 may have a higher frequency and/or be perceived as higher by a human listener than lower pitch 402. Lower pitch 402 and/or higher pitch 404 may be the same as, similar to, and/or part of the audio data described herein.

Lower pitch 402 may be shown as a sinusoidal wave with a longer wavelength and/or lower frequency than higher pitch 404. Over a period of time, lower pitch 402 will have less oscillations than higher pitch 404.

Higher pitch 404 may be shown as a sinusoidal wave with a shorter wavelength and/or higher frequency than lower pitch 402. Over a period of time, higher pitch 404 will have more oscillations than lower pitch 402.

The number and arrangement of pitches shown in FIG. 4 are provided as an example. There may be additional pitches, fewer pitches, different pitches, and/or differently arranged pitches (e.g., in audio data such as a voice sample) than those shown in FIG. 4.

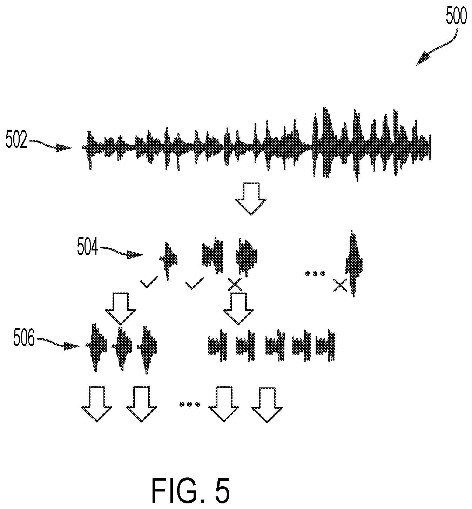

Referring now to FIG. 5, FIG. 5 is a diagram of an exemplary implementation 500 of a non-limiting embodiment or aspect of process 300 shown in FIG. 3. As shown in FIG. 5, implementation 500 may include audio data 502 and pitches 504 and 506. In some non-limiting embodiments or aspects, one or more of the steps of implementation 500 may be performed (e.g., completely, partially, and/or the like) by audio de-identification system 104 (e.g., one or more devices of audio de-identification system 104). In some non-limiting embodiments or aspects, one or more of the steps of implementation 500 may be performed (e.g., completely, partially, and/or the like) by another system, another device, another group of systems, or another group of devices, separate from or including audio de-identification system 104, such as user device 102, destination system 106 (e.g., one or more devices of destination system 106), receiver device 108, and/or the like.

In some non-limiting embodiments or aspects, audio data 502 may include audio data (e.g., a voice sample data and/or the like) associated with a plurality of media files (e.g., voice samples and/or the like). Additionally or alternatively, audio data 502 may be used to identify a first set of pitches 504. For example, audio data 502 may be input into CREPE and/or the like to identify a first set of pitches 504.

In some non-limiting embodiments or aspects, set of pitches 504 may be the first generation (e.g., parent generation). For example, set of pitches 504 may be input into a DE algorithm to determine which pitch/pitches of set of pitches 504 will have a high impact, as described herein, and those pitches may be successful (e.g., the two pitches from 504 with check marks) and may be passed on to the next generation (e.g., child generation). Additionally or alternatively, the DE algorithm may output a new set of pitches 506 which are the second generation (e.g., child generation) of the first generation (e.g., parent generation). For example, the pitch/pitches of the set of pitches 504 which are determined to have a high impact may be passed on to the second generation (e.g., child generation) to generate a new set of pitches 506, as described herein.

In some non-limiting embodiments or aspects, set of pitches 506 may be the second generation (e.g., child generation). Additionally or alternatively, the DE process may repeat evaluating the set of pitches 506 to determine which pitch/pitches of set of pitches 506 will have a high impact, as described herein, and successful pitches may be passed on to the next generation (e.g., grandchild generation, third generation, and/or the like). The DE process may repeat (e.g., iteratively repeat, generate multiple generations, and/or the like) until pitches with the highest impact are identified.

The number and arrangement of elements (e.g., pitches) shown in FIG. 5 are provided as an example. There may be additional elements (e.g., pitches), fewer elements, different elements, and/or differently arranged elements than those shown in FIG. 5.

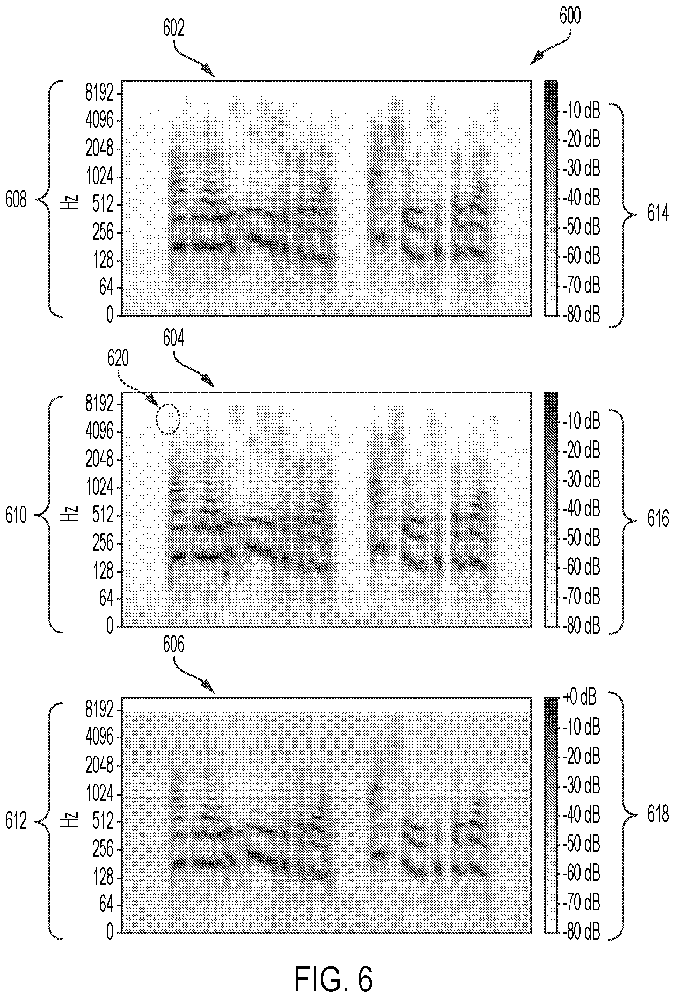

Referring now to FIG. 6, FIG. 6 is a screen shot of an exemplary graph 600 of a non-limiting embodiment or aspect of at least one voice sample. As shown in FIG. 6, graph 600 may include voice sample graphs 602, 604, and 606, scales 614, 616, and 618, vertical axes 608, 610, and 612, and a circle 620 .

In some non-limiting embodiments or aspects, voice sample graphs 602, 604, and 606 may include original voice sample graph 602, voice sample graph after applying one pitch perturbation 604, and/or voice sample graph after applying FGSM-based perturbation 606. For example, original voice sample graph 602 may illustrate the frequency (e.g., vertical axis 608) and decibels (scale 614) of at least one voice sample. Additionally or alternatively, voice sample graph after applying one pitch perturbation 604 may illustrate the frequency (e.g., vertical axis 610) and decibels (e.g., scale 616) of the voice sample(s) after applying one pitch perturbation. Additionally or alternatively, voice sample graph after applying FGSM-based perturbation 606 may illustrate the frequencies (e.g., vertical axis 612) and decibels (e.g., scale 618) of the voice sample(s) from the plurality of audio data after applying FGSM-based perturbation. In some non-limiting embodiments or aspects, in voice sample graph after applying FGSM-based perturbation 606, it may be observed that applying FGSM-based perturbation introduces noticeable noise to the at least one voice sample and/or considerably changes the at least one voice sample.

In some non-limiting embodiments or aspects, scales 614, 616, and/or 618 may indicate the intensity of at least one voice sample using a range measured in decibels (dB). For example, scales 614, 616, and 618 may indicate the intensity of at least one voice sample on a scale ranging from -80 dB through -10 dB. Additionally or alternatively, scales 614, 616, and/or 618 may use darker colors to represent higher decibels and lighter colors to represent lower decibels. For example, if part or parts of at least one voice sample reach -40 dB through -10 dB, they may appear darker in color than a part or parts of the at least once voice sample that fall below -40 dB.

In some non-limiting embodiments or aspects, vertical axes 608, 610, and 612 may represent the frequency of at least one voice sample. For example, vertical axes 608, 610, and 612 may represent the frequencies of at least one voice sample measured in hertz (Hz) from a range of 0 Hz to approximately 8,000 Hz.

In some non-limiting embodiments or aspects, circle 620 may indicate a pitch from a plurality of pitches from the at least one voice sample that has been perturbed (e.g., injected with at least one perturbation). For example, circle 620 may indicate a pitch from a plurality of pitches from the at least one voice sample which was perturbed to move the voice sample toward (e.g., across) the boundary line of the at least one classifier model to generate a new voice sample.

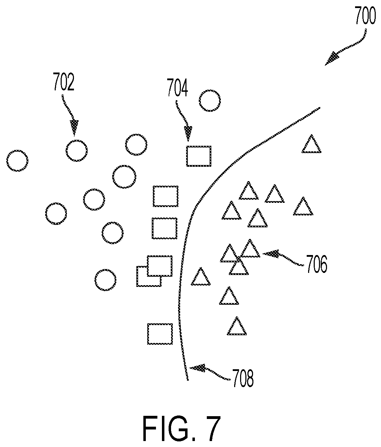

Referring now to FIG 7, FIG. 7 is an exemplary graph 700 of a non-limiting embodiment or aspect of a voice sample before applying the perturbation method. As shown in FIG. 7, graph 700 may include nodes 702, 704, and 706, and boundary line 708. In some non-limiting embodiments or aspects, nodes 702 may be relatively far to the left of boundary line 708, nodes 704 may be relatively near boundary line 708 and on a left side thereof, and nodes 706 may be on the right side of boundary line 708.

In some non-limiting embodiments or aspects, each of nodes 702, 704, and 706 may represent at least one voice sample from a plurality of voice samples (e.g., from audio data). Additionally or alternatively, nodes 702, 704, and/or 706 may appear on either the left side of boundary line 708 (e.g., in front of the boundary line) or the right side of boundary line 708 (e.g., across the boundary line). Additionally or alternatively, nodes 702, 704, and/or 706 may be perturbed to move from the left of boundary line 708 to the right of boundary line 708 (e.g., crossing the boundary line). For example, nodes 702, 704, and/or 706 may represent at least one voice sample which may be injected with a perturbation shifting the respective node closer and closer to boundary line 708 until the respective node crosses over boundary line 708 to the right side of boundary line 708 (e.g., across the boundary line). In some non-limiting embodiments or aspects, nodes 702, 704, and/or 706 near the left edge of boundary line 708 (e.g., in front of the boundary line) may cross over the boundary line at a higher rate of success than nodes that are further to the left of the left edge of the boundary line.

In some non-limiting embodiments or aspects, boundary line 708 may be the boundary line of at least one classifier model.

In some non-limiting embodiments or aspects, it may be observed that using the one pitch method on its own may not be successful.

The number and arrangement of elements (e.g., nodes and/or boundary lines) shown in FIG. 7 are provided as an example. There may be additional elements (e.g., nodes and/or boundary lines), fewer elements, different elements, differently arranged elements, and/or more dimensions of the elements than those shown in FIG. 7.

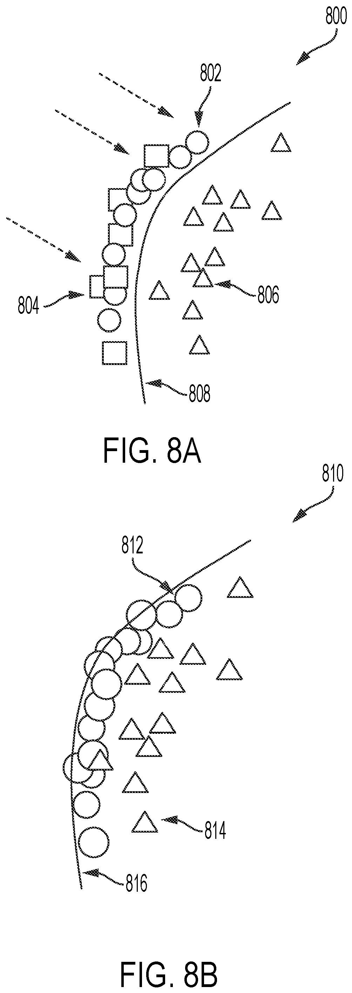

FIG. 8A is an exemplary graph 800 of a non-limiting embodiment or aspect of a voice sample after applying FGSM-based perturbation and FIG. 8B is an exemplary graph 810 of a non-limiting embodiment or aspect of a voice sample after applying a combination of FGSM-based perturbation and one pitch perturbation.

As shown in FIG. 8A, graph 800 may include nodes 802, 804, and 806, and boundary line 808. In some non-limiting embodiments or aspects, nodes 802 may be the same as or similar to nodes 702 (e.g., after applying FGSM and/or the like). Additionally or alternatively, nodes 804 may be the same as or similar to nodes 704 (e.g., after applying FGSM and/or the like). Additionally or alternatively, nodes 806 may be the same as or similar to nodes 806. Additionally or alternatively, boundary line 808 may be the same as or similar to boundary line 708.

As shown in FIG. 8B, graph 810 may include nodes 812 and 814, and boundary line 816. In some non-limiting embodiments or aspects, nodes 812 may be the same as or similar to nodes 702 and/or 704 (e.g., after applying a combination of gradient-based perturbation (e.g., FGSM and/or the like) and one pitch perturbation) and/or the same as or similar to nodes 802 and/or 804 (e.g., after applying one pitch perturbation). Additionally or alternatively, nodes 814 may be the same as or similar to nodes 706 and/or nodes 806. Additionally or alternatively, boundary line 816 may be the same as or similar to boundary line 708 and/or boundary line 808.

In some non-limiting embodiments or aspects, nodes 802, 804, 806, 812, and 814 may be at least one voice sample from a plurality of audio data. Additionally or alternatively, nodes 802, 804, 806, 812, and 814 may appear on either the left side of boundary lines 808 and 816 (e.g., in front of the boundary line) or the right side of boundary lines 808 and 816 (e.g., across the boundary line). Additionally or alternatively, nodes 802, 804, 806, 808, 812, and 814 may be perturbed to move from one side (e.g., the left) of boundary lines 808 and 816 to the other side (e.g., the right) of boundary lines 808 and 816 (e.g., crossing the boundary line). For example, nodes 802 and 804 may represent voice samples, which may be injected with a perturbation (e.g., FGSM-based perturbation and/or the like) causing nodes 802 and 804 to shift closer to boundary line 808, and nodes 812 may represent the same voice samples, which may be injected with a perturbation (e.g., one pitch perturbation) causing nodes 812 to shift across boundary line 816, as described herein.

In some non-limiting embodiments or aspects, boundary lines 808 and 816 may be the boundary line(s) of at least one classifier model.

In some non-limiting embodiments or aspects, it may be observed that using a combination of gradient-based perturbation (e.g., FGSM and/or the like) and one pitch perturbation (e.g., FIG. 8B) yields better results that using gradient-based perturbation (e.g., FGSM and/or the like) on its own (e.g., FIG. 8A).

The number and arrangement of elements (e.g., nodes and/or boundary lines) shown in FIGS. 8A and 8B are provided as an example. There may be additional elements (e.g., nodes and/or boundary lines), fewer elements, different elements, differently arranged elements, and/or more dimensions of the elements than those shown in FIGS. 8A and 8B.

Although the disclosed subject matter has been described in detail for the purpose of illustration based on what is currently considered to be the most practical and preferred embodiments or aspects, it is to be understood that such detail is solely for that purpose and that the disclosed subject matter is not limited to the disclosed embodiments or aspects.
For example, it is to be understood that the presently disclosed subject matter contemplates that, to the extent possible, one or more features of any embodiment or aspect can be combined with one or more features of any other embodiment or aspect.

## Claims

1. A computer-implemented method (300), comprising:
receiving (302), with at least one processor, audio data associated with at least one voice sample;
perturbing (304), with the at least one processor, one or more of the at least one voice sample using a gradient-based perturbation algorithm, the gradient-based perturbation algorithm embedding noise in the one or more of the at least one voice sample such that the one or more of the at least one voice sample is moved toward an edge of a decision boundary of at least one classifier model;
perturbing (306), with the at least one processor, one pitch of each voice sample of the at least one voice sample to shift each voice sample of the at least one voice sample across the decision boundary of the at least one classifier model to provide at least one de-identified voice sample; and
encoding (308), with the at least one processor, a media file with the at least one de-identified voice sample.

2. The computer-implemented method (300) of claim 1, wherein using the gradient-based perturbation algorithm comprises:
computing, with the at least one processor, a gradient of the one or more of the at least one voice sample;
determining, with the at least one processor, a direction of the gradient; and
injecting, with the at least one processor, a perturbation into the one or more of the at least one voice sample based on the gradient and the direction.

3. The computer-implemented method (300) of claim 1 , wherein the gradient-based perturbation algorithm comprises a fast gradient signed method (FGSM) attack algorithm.

4. The computer-implemented method (300) of any preceding claim, wherein perturbing one pitch of each voice sample of the at least one voice sample comprises:
determining, with the at least one processor, a spectrum of pitches from each voice sample of the at least one voice sample;
inputting, with the at least one processor, the spectrum of pitches into a non-gradient based perturbation algorithm to provide a level of impact of perturbing each pitch of the spectrum of pitches;
selecting, with the at least one processor, at least one pitch of the spectrum of pitches based on the respective level of impact thereof; and
injecting, with the at least one processor, a perturbation into the at least one pitch selected to shift each voice sample of the at least one voice sample across the decision boundary of the at least one classifier model.

5. The computer-implemented method (300) of claim 4, wherein the non-gradient based perturbation algorithm comprises at least one of a genetic algorithm, an evolutionary algorithm, a differential evolutionary algorithm, or any combination thereof.

6. The computer-implemented method (300) of any preceding claim, wherein a difference between the at least one voice sample and the at least one de-identified voice sample is imperceptible to a human listener.

7. The computer-implemented method (300) of any of claims 4 to 6, wherein selecting the at least one pitch from the spectrum of pitches comprises:
determining, with the at least one processor, the at least one pitch of the spectrum of pitches has a highest impact on de-identification of the audio data.

8. A system (200), comprising:
at least one processor (204); and
at least one non-transitory computer-readable medium (208) comprising instructions to direct the at least one processor (204) to:
receive audio data associated with at least one voice sample;
perturb one or more of the at least one voice sample using a gradient-based perturbation algorithm, the gradient-based perturbation algorithm embedding noise in the one or more of the at least one voice sample such that the one or more of the at least one voice sample is moved toward an edge of a decision boundary of at least one classifier model;
perturb one pitch of each voice sample of the at least one voice sample to shift each voice sample of the at least one voice sample across the decision boundary of the at least one classifier model to provide at least one de-identified voice sample; and
encode a media file with the at least one de-identified voice sample.

9. The system (200) of claim 8, wherein using a gradient-based perturbation algorithm comprises:
computing a gradient of the one or more of the at least one voice sample;
determining a direction of the gradient; and
injecting a perturbation into the one or more of the at least one voice sample based on the gradient and the direction.

10. The system (200) of claim 8, wherein the gradient-based perturbation algorithm comprises a fast gradient signed method (FGSM) attack algorithm.

11. The system (200) of any of claims 8 to 10, wherein perturbing one pitch of each voice sample of the at least one voice sample comprises:
determining a spectrum of pitches from each voice sample of the at least one voice sample;
inputting the spectrum of pitches into a non-gradient based perturbation algorithm to provide a level of impact of perturbing each pitch of the spectrum of pitches;
selecting at least one pitch of the spectrum of pitches based on the respective level of impact thereof; and
injecting a perturbation into the at least one pitch selected to shift each voice sample of the at least one voice sample across the decision boundary of the at least one classifier model.

12. The system (200) of claim 11, wherein selecting the at least one pitch from the spectrum of pitches comprises:
determining the at least one pitch of the spectrum of pitches has a highest impact on de-identification of the audio data.

13. A computer program product comprising at least one non-transitory computer-readable medium including one or more instructions that, when executed by at least one processor, cause the at least one processor to perform the method of any of claims 1 to 7.

## Patentansprüche

1. Computerimplementiertes Verfahren (300), umfassend:
Empfangen (302), mit mindestens einem Prozessor, von Audiodaten, die mindestens einer Stimmprobe zugeordnet sind;
Stören (304), mit dem mindestens einen Prozessor, einer oder mehrerer von der mindestens einen Stimmprobe unter Verwendung eines gradientenbasierten Störungsalgorithmus, wobei der gradientenbasierte Störungsalgorithmus Rauschen in die eine oder die mehreren von der mindestens einen Stimmprobe einbettet, sodass die eine oder die mehreren von der mindestens einen Stimmprobe hin zu einer Kante einer Entscheidungsgrenze mindestens eines Klassifikatormodells bewegt werden;
Stören (306), mit dem mindestens einen Prozessor, einer Tonhöhe jeder Stimmprobe der mindestens einen Stimmprobe so, dass jede Stimmprobe der mindestens einen Stimmprobe über die Entscheidungsgrenze des mindestens einen Klassifikatormodells verschoben wird, um mindestens eine anonymisierte Stimmprobe bereitzustellen; und
Codieren (308), mit dem mindestens einen Prozessor, einer Mediendatei mit der mindestens einen anonymisierten Stimmprobe.

2. Computerimplementiertes Verfahren (300) nach Anspruch 1, wobei das Verwenden des gradientenbasierten Störungsalgorithmus Folgendes umfasst:
Berechnen, mit dem mindestens einen Prozessor, eines Gradienten der einen oder der mehreren von der mindestens einen Stimmprobe;
Bestimmen, mit dem mindestens einen Prozessor, einer Richtung des Gradienten; und
Einbringen, mit dem mindestens einen Prozessor, einer Störung in die eine oder die mehreren von der mindestens einen Stimmprobe basierend auf dem Gradienten und der Richtung.

3. Computerimplementiertes Verfahren (300) nach Anspruch 1, wobei der gradientenbasierte Störungsalgorithmus einen FGSM(Fast Gradient Sign Method)-Angriffsalgorithmus umfasst.

4. Computerimplementiertes Verfahren (300) nach einem der vorhergehenden Ansprüche, wobei das Stören einer Tonhöhe jeder Stimmprobe der mindestens einen Stimmprobe Folgendes umfasst:
Bestimmen, mit dem mindestens einen Prozessor, eines Spektrums von Tonhöhen aus jeder Stimmprobe der mindestens einen Stimmprobe;
Eingeben, mit dem mindestens einen Prozessor, des Spektrums von Tonhöhen in einen nicht gradientenbasierten Störungsalgorithmus, um einen Auswirkungsgrad des Störens jeder Tonhöhe des Spektrums von Tonhöhen bereitzustellen;
Auswählen, mit dem mindestens einen Prozessor, mindestens einer Tonhöhe des Spektrums von Tonhöhen basierend auf dem jeweiligen Auswirkungsgrad davon; und
Einbringen, mit dem mindestens einen Prozessor, einer Störung in die mindestens eine Tonhöhe, die so ausgewählt ist, dass sie jede Stimmprobe der mindestens einen Stimmprobe über die Entscheidungsgrenze des mindestens einen Klassifikatormodells verschiebt.

5. Computerimplementiertes Verfahren (300) nach Anspruch 4, wobei der nicht gradientenbasierte Störungsalgorithmus mindestens eines von einem genetischen Algorithmus, einem evolutionären Algorithmus, einem differentiellen evolutionären Algorithmus oder einer beliebigen Kombination davon umfasst.

6. Computerimplementiertes Verfahren (300) nach einem der vorhergehenden Ansprüche, wobei eine Differenz zwischen der mindestens einen Stimmprobe und der mindestens einen anonymisierten Stimmprobe für einen menschlichen Zuhörer nicht wahrnehmbar ist.

7. Computerimplementiertes Verfahren (300) nach einem der Ansprüche 4 bis 6, wobei das Auswählen der mindestens einen Tonhöhe aus dem Spektrum von Tonhöhen Folgendes umfasst:
Bestimmen, mit dem mindestens einen Prozessor, dass die mindestens eine Tonhöhe des Spektrums von Tonhöhen eine größte Auswirkung auf die Anonymisierung der Audiodaten hat.

8. System (200), umfassend:
mindestens einen Prozessor (204); und
mindestens ein nichtflüchtiges computerlesbares Medium (208), das Anweisungen umfasst, die den mindestens einen Prozessor (204) anweisen zum:
Empfangen von Audiodaten, die mindestens einer Stimmprobe zugeordnet sind;
Stören einer oder mehrerer von der mindestens einen Stimmprobe unter Verwendung eines gradientenbasierten Störungsalgorithmus, wobei der gradientenbasierte Störungsalgorithmus Rauschen in die eine oder die mehreren von der mindestens einen Stimmprobe einbettet, sodass die eine oder die mehreren von der mindestens einen Stimmprobe hin zu einer Kante einer Entscheidungsgrenze mindestens eines Klassifikatormodells bewegt werden;
Stören einer Tonhöhe jeder Stimmprobe der mindestens einen Stimmprobe so, dass jede Stimmprobe der mindestens einen Stimmprobe über die Entscheidungsgrenze des mindestens einen Klassifikatormodells verschoben wird, um mindestens eine anonymisierte Stimmprobe bereitzustellen; und
Codieren einer Mediendatei mit der mindestens einen anonymisierten Stimmprobe.

9. System (200) nach Anspruch 8, wobei das Verwenden eines gradientenbasierten Störungsalgorithmus Folgendes umfasst:
Berechnen eines Gradienten der einen oder der mehreren von der mindestens einen Stimmprobe;
Bestimmen einer Richtung des Gradienten; und
Einbringen einer Störung in die eine oder die mehreren von der mindestens einen Stimmprobe basierend auf dem Gradienten und der Richtung.

10. System (200) nach Anspruch 8, wobei der gradientenbasierte Störungsalgorithmus einen FGSM(Fast Gradient Sign Method)-Angriffsalgorithmus umfasst.

11. System (200) nach einem der Ansprüche 8 bis 10, wobei das Stören einer Tonhöhe jeder Stimmprobe der mindestens einen Stimmprobe Folgendes umfasst:
Bestimmen eines Spektrums von Tonhöhen aus jeder Stimmprobe der mindestens einen Stimmprobe;
Eingeben des Spektrums von Tonhöhen in einen nicht gradientenbasierten Störungsalgorithmus, um einen Auswirkungsgrad des Störens jeder Tonhöhe des Spektrums von Tonhöhen bereitzustellen;
Auswählen mindestens einer Tonhöhe des Spektrums von Tonhöhen basierend auf dem jeweiligen Auswirkungsgrad davon; und
Einbringen einer Störung in die mindestens eine Tonhöhe, die so ausgewählt ist, dass sie jede Stimmprobe der mindestens einen Stimmprobe über die Entscheidungsgrenze des mindestens einen Klassifikatormodells verschiebt.

12. System (200) nach Anspruch 11, wobei das Auswählen der mindestens einen Tonhöhe aus dem Spektrum von Tonhöhen Folgendes umfasst:
Bestimmen, dass die mindestens eine Tonhöhe des Spektrums von Tonhöhen eine größte Auswirkung auf die Anonymisierung der Audiodaten hat.

13. Computerprogrammprodukt, das mindestens ein nichtflüchtiges computerlesbares Medium umfasst, das eine oder mehrere Anweisungen enthält, die, bei Ausführung durch mindestens einen Prozessor, den mindestens einen Prozessor veranlassen, das Verfahren nach einem der Ansprüche 1 bis 7 durchzuführen.

## Revendications

1. Procédé mis en œuvre par ordinateur (300) comprenant :
la réception (302), avec au moins un processeur, de données audio associées à au moins un échantillon vocal ;
la perturbation (304), avec l'au moins un processeur, d'un ou plusieurs des au moins un échantillon vocal utilisant un algorithme de perturbation basé sur un gradient, l'algorithme de perturbation basé sur un gradient incorporant du bruit dans les un ou plusieurs des au moins un échantillon vocal de sorte que les un ou plusieurs des au moins un échantillon vocal est déplacé vers un bord d'une limite de décision d'au moins un modèle de classification ;
la perturbation (306), avec l'au moins un processeur, d'un ton de chaque échantillon vocal des au moins un échantillon vocal pour décaler chaque échantillon vocal des au moins un échantillon vocal sur la limite de décision de l'au moins un modèle de classification pour fournir au moins un échantillon vocal anonymisé ; et
le codage (308), avec l'au moins un processeur, d'un fichier multimédia avec l'au moins un échantillon vocal anonymisé.

2. Procédé mis en œuvre par ordinateur (300) selon la revendication 1, dans lequel l'utilisation de l'algorithme de perturbation basé sur un gradient comprend :
le calcul, avec l'au moins un processeur, d'un gradient des un ou plusieurs des au moins un échantillon vocal ;
la détermination, avec l'au moins un processeur, d'une direction du gradient ; et
l'injection, avec l'au moins un processeur, d'une perturbation dans les un ou plusieurs des au moins un échantillon vocal sur la base du gradient et de la direction.

3. Procédé mis en œuvre par ordinateur (300) selon la revendication 1, dans lequel l'algorithme de perturbation basé sur un gradient comprend un algorithme d'attaque de procédé de signe de gradient rapide (FGSM).

4. Procédé mis en œuvre par ordinateur (300) selon l'une quelconque des revendications précédentes, dans lequel la perturbation d'un ton de chaque échantillon vocal des au moins un échantillon vocal comprend :
la détermination, avec l'au moins un processeur, d'un spectre de tons à partir de chaque échantillon vocal des au moins un échantillon vocal ;
la fourniture en entrée, avec l'au moins un processeur, du spectre de tons dans un algorithme de perturbation sans gradient pour fournir un niveau d'impact de perturbation de chaque ton du spectre de tons ;
la sélection, avec l'au moins un processeur, d'au moins un ton du spectre de tons sur la base du niveau respectif d'impact de celui-ci ; et
l'injection, avec l'au moins un processeur, d'une perturbation dans l'au moins un ton sélectionné pour décaler chaque échantillon vocal des au moins un échantillon vocal sur la limite de décision de l'au moins un modèle de classification.

5. Procédé mis en œuvre par ordinateur (300) selon la revendication 4, dans lequel l'algorithme de perturbation sans gradient comprend au moins l'un parmi un algorithme parmi un algorithme génétique, un algorithme évolutif, un algorithme évolutif différentiel ou une combinaison quelconque de ceux-ci.

6. Procédé mis en œuvre par ordinateur (300) selon l'une quelconque des revendications précédentes, dans lequel une différence entre l'au moins un échantillon vocal et l'au moins un échantillon vocal anonymisé est imperceptible par un auditeur humain.

7. Procédé mis en œuvre par ordinateur (300) selon l'une quelconque des revendications 4 à 6, dans lequel la sélection de l'au moins un ton à partir du spectre de tons comprend :
la détermination, avec l'au moins un processeur, du fait que l'au moins un ton du spectre de tons a un impact le plus élevé sur l'anonymisation des données audio.

8. Système (200) comprenant :
au moins un processeur (204) ; et
au moins un support non transitoire lisible par ordinateur (208) comprenant des instructions pour ordonner à l'au moins un processeur (204) de :
recevoir des données audio associées à au moins un échantillon vocal ;
perturber un ou plusieurs des au moins un échantillon vocal utilisant un algorithme de perturbation basé sur un gradient, l'algorithme de perturbation basé sur un gradient incorporant du bruit dans les un ou plusieurs des au moins un échantillon vocal de sorte que les un ou plusieurs des au moins un échantillon vocal est déplacé vers un bord d'une limite de décision d'au moins un modèle de classification ;
perturber un ton de chaque échantillon vocal des au moins un échantillon vocal pour décaler chaque échantillon vocal des au moins un échantillon vocal sur la limite de décision de l'au moins un modèle de classification pour fournir au moins un échantillon vocal anonymisé ; et
coder un fichier multimédia avec l'au moins un échantillon vocal anonymisé.

9. Système (200) selon la revendication 8, dans lequel l'utilisation d'un algorithme de perturbation basé sur un gradient comprend :
le calcul d'un gradient des un ou plusieurs des au moins un échantillon vocal ; la détermination d'une direction du gradient ; et
l'injection d'une perturbation dans les un ou plusieurs des au moins un échantillon vocal sur la base du gradient et de la direction.

10. Système (200) selon la revendication 8, dans lequel l'algorithme de perturbation basé sur un gradient comprend un algorithme d'attaque de procédé de signe de gradient rapide (FGSM).

11. Système (200) selon l'une quelconque des revendications 8 à 10, dans lequel la perturbation d'un ton de chaque échantillon vocal des au moins un échantillon vocal comprend :
la détermination d'un spectre de tons à partir de chaque échantillon vocal des au moins un échantillon vocal ;
la fourniture en entrée du spectre de tons dans un algorithme de perturbation sans gradient pour fournir un niveau d'impact de perturbation de chaque ton du spectre de tons ;
la sélection d'au moins un ton du spectre de tons sur la base du niveau respectif d'impact de celui-ci ; et
l'injection d'une perturbation dans l'au moins un ton sélectionné pour décaler chaque échantillon vocal des au moins un échantillon vocal sur la limite de décision de l'au moins un modèle de classification.

12. Système (200) selon la revendication 11, dans lequel la sélection de l'au moins un ton à partir du spectre de tons comprend :
la détermination du fait que l'au moins un ton du spectre de tons a un impact le plus élevé sur l'anonymisation des données audio.

13. Produit de programme d'ordinateur comprenant au moins un support non transitoire lisible par ordinateur comportant une ou plusieurs instructions qui, lorsqu'elles sont exécutées par au moins un processeur, amènent l'au moins un processeur à réaliser le procédé de l'une quelconque des revendications 1 à 7.
